# EUROPEAN PATENT SPECIFICATION

(11) **EP 0 417 705 B1**
(45) Date of publication and mention of the grant of the patent: **24.05.1995**
(21) Application number: 90117411.0
(22) Date of filing: 10.09.1990
(51) Int. Cl.: C04B 7/24, C04B 7/36

(54) **Method and system for aqueous sewage sludge disposal**
Verfahren und System zur Entsorgung von wässrigem Klärschlamm
Procédé et système pour mise au rebut de boues d'égout aqueuses

(30) Priority: 11.09.1989 JP 232733/89
(43) Date of publication of application: 20.03.1991
(73) Proprietor: ONODA CEMENT COMPANY, LTD., Onoda-shi Yamaguchi-ken (JP); ONODA CHEMICO CO., LTD., Chuo-ku, Tokyo (JP)
(72) Inventor: Yamane, Isao, c/o Onoda Cement Co., Ltd., Koto-ku, Tokyo (JP); Saito, Toru, c/o Onoda Cement Co., Ltd., Koto-ku, Tokyo (JP); Shimoda, Masao, c/o Onoda Chemico Co.,Ltd., Koto-ku, Tokyo (JP); Kouchi, Satoshi, c/o Onoda Chemico Co., Ltd., Koto-ku, Tokyo (JP)
(74) Representative: Strehl Schübel-Hopf Groening & Partner

(56) References cited:
- EP-A- 0 124 038
- EP-A- 0 141 932
- EP-A- 0 162 215
- DE-A- 2 917 123
- DE-A- 3 542 004
- DE-A- 3 542 145
- DE-A- 3 545 317
- FR-A- 2 282 407

## Description

### Background of the Invention

This invention relates to a system for disposal of aqueous sewage sludge by using it to make cement. Recently, amounts of sewage sludge released mainly from waste water treatment plants are increasing year by year, and are being treated by various processes.

For example, sewage sludge is mixed with fermentation auxiliaries, such as rice hulls and saw dust, and subjected to fermentation to produce compost. This compost is used for farmland, but its consumption is limited in quantity, and it is difficult to consume and reduce large amounts of compost.

Another method is to throw untreated sewage sludge into the seas. But regulations are gradually becoming stricter and this method is not desirable in view of the need for protection of the environment. Another method is to spread the sludge on farmland expecting fertilizing effects, but it is difficult to dispose of large amounts by this method.

Untreated sewage sludge is used in land reclamation, or sewage sludge is solidified with a solidification agent such as cement or lime and used in reclamation. However, it is becoming difficult year by year to find lands to be reclaimed; thus limiting the disposable amounts.

Sewage sludge has been burned in order to reduce the volume. However, this method releases large amounts of ash, which are usually disposed of by reclamation and hence the disposable amounts are limited. Part of the ash is used in architectural and horticultural materials, but amounts of consumption in these areas are also limited. Furthermore, this method has the inherent problem of high combustion costs.

### Summary of the Invention

With a view to these prior art problems, it is a primary object of the present invention to provide a system for utilizing sewage sludge in a manner which can efficiently treat large amounts thereof.

In accordance with the present invention which attains the above object, there is provided a system for utilizing sewage sludge comprising a combination of a dehydration process for dehydrating the sewage sludge by mixing a quicklime-containing material, a cement conversion process for putting solids released from the dehydration process in a cement kiln with other cement raw materials to yield cement, and a gas treatment process for introducing gases released from the dehydration process into a cement burning process.

### Brief Description of the Drawings

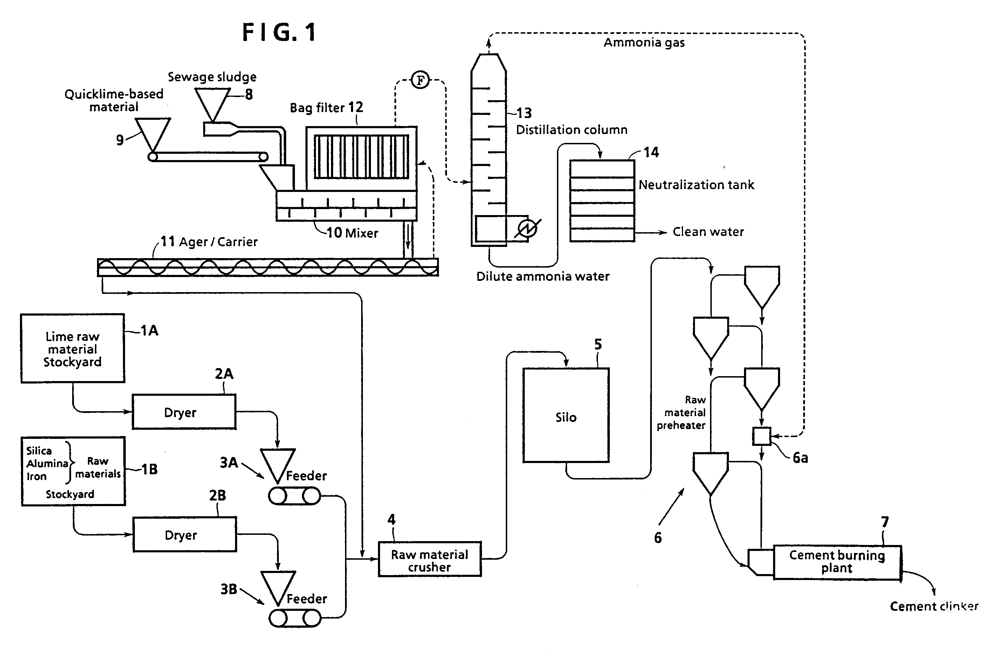

Fig.1 is a diagram showing a cement burning process in an embodiment of the present invention.

### Detailed Description of the Invention

Sewage sludge in the present invention means sludge released mainly from sewage treatment plants, and includes sludges released from treatment of raw sewage, home waste water, and industrial waste water. Water contents of these sludges are normally 60% or more.

The quicklime-containing material to be mixed with sewage sludge in the present invention comprises CaO which reacts with the water in the sewage sludge to produce slaked lime. Specifically, the quicklime-containing material includes quicklime, calcined dolomite, granulated slag, and blast furnace slag and contains at least 30% CaO, preferably at least 70%; other constituents may also be present if they do not interfere with the production of cement. The quicklime-containing material has a particle diameter of 70 mm or less, preferably 30 mm or less.

In the present invention, the ratio of sewage sludge to the quicklime-containing material is not specifically limited, however, since it is necessary to dehydrate the sewage sludge by mixing to produce solids which can be converted into cement in the subsequent process, the ratio of quicklime-containing material/sewage sludge is typically 1.5 to 0.5, preferably 1 to 0.7. Mixing is accomplished by mechanical agitation using a paddle mixer, pug mill, or the like, at a rotational speed of 10 to 80 rpm, preferably 20 to 50 rpm, and for a mixing time of 1 to 30 minutes, preferably 3 to 20 minutes.

When sewage sludge is mixed with the quicklime-containing material, water in the sewage sludge reacts therewith to yield slaked lime. Therefore, the solids, containing 20% or less of water, produced by the dehydration process comprise slaked lime and the solid constituents of the sewage sludge.

In the present invention, the solids produced by the dehydration process are then converted into cement. Specifically, the solids are put into a cement raw material handling system such as a dryer or a mill at a cement plant. Then, in the cement kiln, the slaked lime and inorganic substances in the solid constituents of the sludge become the raw materials of the cement, and organic substances in the solid constituents of the sludge become fuel for cement burning.

However, the dehydration process releases malodorous gases such as ammonia (NH₃) which are treated by introducing them into the cement burning process. These gases are generated together with dust, which is mainly slaked lime fine powder, and water vapor which has adverse effects on cement burning in a dry process. Therefore, it is desirable that such fine powder be removed as by a bag filter or the like and water vapor be removed as by a distillation column or the like. Thereafter, the result is introduced by way of a rear port of the cement kiln, into the cement burning process. This decomposes the malodorous gases and, in particular, denitration occurs due to the ammonia. Water vapor is collected as drain water from the distillation column. When the drain water is dilute ammonia water, it is neutralized and then discharged.

As described above, the present invention can treat sewage sludge entirely in the cement plant and does not release any wastes. Furthermore, organic substances in the sludge can be utilized as a fuel, thereby supplying heat for cement burning and reducing the NOₓ content of the cement kiln exhaust gas.

Cement types that can be produced by cement burning to which the present invention is applied are not specifically limited and include Portland cement and alumina cement. When the amount of the sludge solid constituents is 30 weight % or less based on the total amount of the cement raw materials, the sludge can be treated with no adverse effects on the properties of the resulting cement.

### Description of the Preferred Embodiments

The present invention will now be described with reference to the embodiments.

Fig.1 shows a cement burning process in a cement plant to which the present invention is applied. Referring to Fig.1, lime raw material stored in a stockyard 1A and silica, alumina, and iron-based raw materials stored in a stockyard 1B are respectively introduced into raw material crusher 4 through dryers 2A and 2B and feeders 3A and 3B. These raw materials are crushed in raw material crusher 4, introduced into raw material silo 5, preheated by raw material preheater 6, and then fired in cement burning kiln 7 into cement clinkers. The above procedure is the same as that in ordinary cement production plants.

Sewage sludge and a quicklime-based material are respectively introduced from hoppers 8 and 9 into mixer 10, which is a paddle mixer. The sewage sludge and quicklime-based material are reacted in mixer 10 at an agitation speed of 30 rpm, and the resulting solids are transferred by ager/carrier 11 to raw material crusher 4. Water vapor generated from mixer 10 is passed through bag filter 12 to collect dust such as slaked lime, and the remaining water vapor is introduced into distillation column 13. Water vapor is removed by distillation column 13, and remaining gases, which mainly comprise ammonia, are introduced into calcining furnace 6a. Dilute ammonia water released from distillation column 13 is neutralized in neutralization tank 14 and discharged as clean water.

Using the above-described procedure, the following experimental operations were carried out. This cement plant operates 24 hours a day using 3,000 tons/day (lime-containing raw materials are approximately 80% of the input) to produce 2,000 tons/day of cement.

### Example 1

Sewage sludge containing 78% water from hopper 8 and quicklime of 30 mm or less in particle size from hopper 9 were introduced at rates of 5 tons/hour (120 tons/day) and 5 tons/hour (120 tons/day), respectively, into mixer 10. Solids produced by mixer 10 were charged into raw material crusher 4 through ager/carrier 11. During this operation, the amount of limestone in the cement raw materials was reduced by 9 tons per hour. Furthermore, heat of 2.75 million Kcal per hour was produced from organic substances contained in the solid components of the sewage sludge.

20,000 ppm of NH₃ gas was detected in the water vapor released from mixer 10. This water vapor was passed through bag filter 12 to distillation column 13, and the resulting gases (mainly comprising ammonia) were fed to cement burning kiln 7 through its rear port. As a result, the NOₓ content of the exhaust gas was decreased from an average of 400 ppm to an average of 300 ppm, thereby facilitating NOₓ reduction treatment. Distillation column 13 released 0.04% dilute ammonia water, which was diluted with sulfuric acid in the neutralization tank 14 and then discharged.

### Example 2

A similar operation was carried out with sewage sludge containing 78% water at a feed rate of 10 tons/hour, quicklime at a feed rate of 10 tons/hour, and a decrease in limestone amount of 18 tons/hour in the cement raw materials. As a result, heat of 5.5 million Kcal was produced from organic substances contained in the solid components of the sewage sludge. Furthermore, the NOₓ content of the exhaust gas was reduced from an average of 400 ppm to an average of 200 ppm.

Cement produced in accordance with Examples 1 and 2 had the same properties as ordinary cement.

Needless to say, solids obtained in the dehydration process are fed to raw material crusher 4 in the above-described Examples, but these may be introduced into the lime-containing raw material in stockyard 1A or dryer 2A.

As described above, the present invention converts sewage sludge into cement without releasing wastes, and reduces the amount of fuel needed for cement burning and the NOₓ content of the exhaust gas.

## Claims

1. A method for the disposal of aqueous sewage sludge comprising:
- dehydrating said sludge by mixing with a quicklime-containing material to form solids and a gas, said gas containing ammonia and water vapor,
- converting said solids to cement by a process of heating with other cement-forming materials, wherein said solids are present in a maximum amount of 30 % by weight based on the total weight of the cement raw materials, and
- separating said gas from said water vapor and introducing said gas into said process.

2. The method of Claim 1, wherein said gas is mixed with quicklime fines, comprising filtering said gas to remove said fines, and distilling said gas and water vapor to remove said water vapor.

3. A system for the disposal of aqueous sewage sludge comprising:
- a dehydration means (8 to 12) for dehydrating said sewage sludge by mixing said sludge with a quicklime-containing material to form solids and a gas, said gas being mixed with water vapor,
- a cement conversion means (1a to 7) comprising a cement burning means (7) for converting said solids in a kiln (7) with other cement raw materials, wherein said solids are added to said kiln (7) in a maximum amount of 30 % by weight based on the total weight of cement raw materials, and
- a treatment means (13) for separating said gas from said water vapor and introducing said gas into said conversion means (1a to 7) at or upstream (6a) of said burning means (7).

4. The system of Claim 3, wherein said quicklime-containing material is selected from the group consisting of quicklime, calcined dolomite, granulated slag, blast furnace slag, and mixtures thereof.

5. The system of any one of Claims 3 or 4, wherein the ratio of said quicklime-containing material/sewage sludge is 1.5 to 0.5.

6. The system of any of the Claims 3 to 5, wherein said quicklime-containing material contains at least 30 % by weight of CaO.

7. The system of any one of the Claims 3 to 6, wherein said quicklime-containing material has a particle diameter not exceeding 70 mm, preferably not exceeding 30 mm.

8. The system of any one of the Claims 3 to 7, wherein said sewage sludge is mixed with said quicklime-containing material by a paddle mixer (10) or a pug mill (10).

9. The system of any one of Claims 3 to 8, wherein said solids are added to said kiln (7) by way of its raw material system (4, 5, 6).

10. The system of any one of Claims 3 to 9, wherein said solids contain a maximum of 20 % by weight of water.

11. The system of any one of Claims 3 to 10, wherein said gas is filtered by a bag filter (12) or the like to remove particulate substances, and water vapor is removed by a distillation column (13) or the like.

12. The system of any one of Claims 3 to 11, wherein said gas is introduced into said cement burning means (7) at a rear port of said kiln (7).

## Patentansprüche

1. Verfahren zur Entsorgung von wässerigem Klärschlamm, beinhaltend :
- Entwässern des Schlamms durch Mischen mit einem Branntkalk enthaltenden Material unter Bildung von Feststoffen und einem Gas, wobei das Gas Ammoniak und Wasserdampf enthält,
- Umwandlung der Feststoffe in Zement durch ein Verfahren des Erhiczens mit anderen zementbildenden Materialien, wobei die Feststoffe zu maximal 30 Gew.-%, bezogen auf das Gesamtgewicht der Zementrohstoffe, vorliegen, und
- Trennen des Gases vom Wasserdampf und Einleiten des Gases in das Verfahren.

2. Verfahren gemäß Anspruch 1, wobei das Gas mit Branntkalk-Feinstaub gemischt ist, und wobei das Verfahren das Filtern des Gases zur Abtrennung des Branntkalk-Feinstaubes und die Destillation des Gases und des Wasserdampfes zur Antrennung des Wasserdampfes beinhaltet.

3. System zur Entsorgung von wässerigem Klärschlamm, umfassend:
- eine Entwässerungsanlage (8 bis 12) zur Entwässerung des wässerigen Klärschlamms durch Mischen des Schlamms mit einem Branntkalk enthaltenden Material unter Bildung von Feststoffen und einem Gas, wobei das Gas mit Wasserdampf gemischt ist,
- eine Zementumwandlungsanlage (1a bis 7), welche eine Zementbrenneinrichtung (7) zur Umwandlung der Feststoffe mit anderen Zementrohstoffen in einem Brennofen beinhaltet, in den die Feststoffe zu maximal 30 Gew.-%, basierend auf dem Gesamtgewicht der Zementrohstoffe, eingeführt werden und
- eine Aufbereitungsanlage (13) zur Trennung des Gases vom Wasserdampf und zur Einleitung des Gases an der Brenneinrichtung (6a) oder stromaufwärts davon in die Zementumwandlungsanlage (1a bis 7).

4. System gemäß Anspruch 3, in dem das Branntkalk enthaltende Material aus Branntkalk, calciniertem Dolomit, granulierter Schlacke, Hochofenschlacke oder einer Mischung daraus besteht.

5. System gemäß einem der Ansprüche 3 oder 4, in dem das Verhältnis des Branntkalk enthaltenden Materials zum Klärschlamm 0,5 bis 1,5 beträgt.

6. System gemäß einem der Ansprüche 3 bis 5, in dem das Branntkalk enthaltende Material mindestens 30 Gew.-% CaO enthält.

7. System gemäß einem der Ansprüche 3 bis 6, in dem das Branntkalk enthaltende Material einen Partikeldurchmesser von nicht größer als 70 mm, bevorzugt nicht größer als 30 mm hat.

8. System gemäß einem der Ansprüche 3 bis 7, in dem der Klärschlamm mit dem Branntkalk enthaltenden Material durch einen Schaufelmischer (10) oder durch ein Knetwerk (10) gemischt wird.

9. System gemäß einem der Ansprüche 3 bis 8, in dem die Feststoffe über das Rohmaterialsystem (4, 5, 6) in den Brennofen (7) eingespeist werden.

10. System gemäß einem der Ansprüche 3 bis 9, in dem die Feststoffe maximal 20 Gew.-% Wasser enthalten.

11. System gemäß einem der Ansprüche 3 bis 10, in dem das Gas zur Abtrennung von feinteiligen Substanzen durch einen Sackfilter (12) oder dergleichen gefiltert wird und Wasserdampf mittels einer Destillationskolonne (13) oder dergleichen entfernt wird.

12. System gemäß einem der Ansprüche 3 bis 11, in dem das Gas über eine rückseitige Öffnung des Brennofens (7) in die Zementbrennanlage (7) eingeleitet wird.

## Revendications

1. Procédé de rejet de boues d'égout aqueuses comprenant les étapes consistant à :
déshydrater lesdites boues par mélange avec un matériau contenant de la chaux vive pour former des matières solides et un gaz, ledit gaz contenant de l'ammoniac et de la vapeur d'eau,
convertir lesdites matières solides en ciment par un processus de chauffage avec d'autres substances de formation de ciment, lesdites matières solides étant présentes selon une quantité maximale de 30% en poids rapportés au poids total des matières premières de formation de ciment, et
séparer ledit gaz de ladite vapeur d'eau et introduire ledit gaz dans ledit processus.

2. Procédé selon la revendication 1, dans lequel ledit gaz est mélangé à des particules de chaux vive, comprenant la filtration dudit gaz pour éliminer lesdites particules, et la distillation dudit gaz et de la vapeur d'eau pour éliminer cette dernière.

3. Système de rejet de boues d'égout aqueuses comportant :
- un moyen de déshydratation (8 à 12) pour déshydrater lesdites boues d'égout en mélangeant lesdites boues à un matériau contenant de la chaux vive pour former des matières solides et un gaz, ledit gaz étant mélangé à de la vapeur d'eau,
- un moyen de conversion en ciment (1a à 7) comportant un moyen de calcination de ciment (7) pour convertir lesdites matières solides dans un four (7) avec d'autres matières premières de formation de ciment, dans lequel lesdites matières solides sont ajoutées audit four (7) selon une quantité maximale de 30% en poids rapportés au poids total des matières premières de formation de ciment, et
- un moyen de traitement (13) pour séparer ledit gaz de ladite vapeur d'eau et introduire ledit gaz dans ledit moyen de conversion (1a à 7) dans ou en amont (6a) dudit moyen de calcination (7).

4. Système selon la revendication 3, dans lequel ledit matériau contenant de la chaux vive est choisi parmi le groupe constitué de chaux vive, de dolomite calcinée, de scories granulées, de scories de haut-fourneau, et des mélanges de ceux-ci.

5. Système selon l'une quelconque des revendications 3 ou 4, dans lequel le rapport dudit matériau contenant de la chaux vive/boues d'égout est 1,5 à 0,5.

6. Système selon l'une quelconque des revendications 3 à 5, dans lequel ledit matériau contenant de la chaux vive contient au moins 30% en poids de CaO.

7. Système selon l'une quelconque des revendications 3 à 6, dans lequel le matériau contenant de la chaux vive présente un diamètre de particule non supérieur à 70 mm, de préférence ne dépassant pas 30 mm.

8. Système selon l'une quelconque des revendications 3 à 7, dans lequel les boues d'égout sont mélangées audit matériau contenant de la chaux vive au moyen d'un mélangeur à pales (10) ou d'un malaxeur (10).

9. Système selon l'une quelconque des revendications 3 à 8, dans lequel lesdites matières solides sont ajoutées audit four (7) au moyen de son système d'alimentation en matières premières (4, 5, 6).

10. Système selon l'une quelconque des revendications 3 à 9, dans lequel lesdites matières solides contiennent un maximum de 20% en poids d'eau.

11. Système selon l'une quelconque des revendications 3 à 10, dans lequel ledit gaz est filtré par un filtre à sac (12) ou analogue pour éliminer des substances particulaires, et la vapeur d'eau est éliminée à l'aide d'une colonne de distillation (13) ou analogue.

12. Système selon l'une quelconque des revendications 3 à 11, dans lequel ledit gaz est introduit dans ledit moyen de calcination de ciment (7) en un orifice postérieur dudit four (7).
